(19) Europäisches Patentamt / European Patent Office / Office européen des brevets

(11) **EP 2 873 221 B1**

(12) **FASCICULE DE BREVET EUROPEEN**

(45) Date de publication et mention
de la délivrance du brevet:
**22.03.2017 Bulletin 2017/12**

(21) Numéro de dépôt: **13730583.5**

(22) Date de dépôt: **24.06.2013**

(51) Int Cl.:
**H04L 29/12** *(2006.01)*    **H04L 29/08** *(2006.01)*

(86) Numéro de dépôt international:
**PCT/EP2013/063126**

(87) Numéro de publication internationale:
**WO 2014/009135 (16.01.2014 Gazette 2014/03)**

(54) **PROCÉDÉ ET SYSTÈME POUR GÉNÉRER UNE ADRESSE INTERNET PROTOCOL (IP) À PARTIR D'UN NUMÉRO D'IDENTIFICATION DE VEHICULE (VIN)**

VERFAHREN UND SYSTEM ZUR ERZEUGUNG EINER INTERNETPROTOKOLL (IP)-ADDRESSE AUS EINER FAHRGESTELLNUMMER

METHOD AND SYSTEM FOR GENERATING AN INTERNET PROTOCOL (IP) ADDRESS FROM A VEHICLE IDENTIFICATION NUMBER (VIN)

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **13.07.2012 FR 1256772**

(43) Date de publication de la demande:
**20.05.2015 Bulletin 2015/21**

(73) Titulaire: **Commissariat à l'Énergie Atomique et aux Énergies Alternatives
75015 Paris (FR)**

(72) Inventeurs:
• **JANNETEAU, Christophe**
  **F-91191 Gif Sur Yvette (FR)**
• **IMADALI, Sofiane**
  **F-91191 Gif Sur Yvette (FR)**
• **PETRESCU, Alexandru**
  **F-91191 Gif Sur Yvette (FR)**

(74) Mandataire: **Lopez, Frédérique et al
Marks & Clerk France
Immeuble Visium
22 Avenue Aristide Briand
94117 Arcueil Cedex (FR)**

(56) Documents cités:
**WO-A1-2008/141335     US-A1- 2012 054 340
US-B2- 7 917 603**

• **Roland Bless: "A Secure IPv6-based Architecture for Internal Automotive Networks", IETF83, 26 mars 2012 (2012-03-26), pages 1-7, XP055058706, Paris, FR Extrait de l'Internet: URL:http://imara.inria.fr/_media/ipv6-its/ 2012-03-26-seis-kit-ietf83-its.pdf [extrait le 2013-04-08] cité dans la demande**

**Description**

**Domaine de l'invention**

L'invention concerne le domaine des communications de l'Internet Protocol (IP) et en particulier l'adressage IP à partir des numéros d'identification de véhicule (VIN).

**Etat de la Technique**

La demande croissante de communication amène des besoins de connexion depuis tout système mobile vers tout système fixe ou mobile. En particulier, les véhicules peuvent être connectés à d'autres véhicules et/ou à des stations fixes. Un véhicule est souvent équipé de plusieurs entités embarquées de calcul et de transmission de données. Une entité couramment appelée « contrôleur des communications » ou routeur est en charge des communications avec l'extérieur du véhicule. Or connecter un véhicule à d'autres véhicules, ou à l'Internet, pose des problèmes d'adressage. Il est nécessaire de pouvoir générer une adresse pour chaque interface des entités communicantes d'un véhicule. Par exemple, un PC embarqué peut utiliser deux interfaces, une Ethernet et une WiFi. Dans ce cas, deux adresses sont requises.

Pour réaliser des communications à l'aide des protocoles TCP/IPv6, une adresse IP est nécessaire pour chacune des interfaces de ces entités. Chaque adresse IP doit être unique, différente de chacune des autres adresses IP de toute autre entité véhiculaire.

Afin d'éviter un processus coûteux d'allocation dynamique d'adresses, il est souhaitable de pouvoir générer localement des adresses IP uniques. L'unicité d'adresse est une caractéristique fondamentale dans les communications IP. Deux équipements ayant la même adresse ne peuvent rentrer en communication.

L'Internet Protocol version 6 (IPv6), connu aussi sous le nom de « Internet Protocol next génération » (IPng) est le successeur de Internet Protocol version 4. IPv6 spécifie les procédures qui sont nécessaires afin d'échanger des paquets de données par le biais de réseaux de commutation de paquets, d'adresser les éléments impliqués dans le routage des paquets (ordinateurs et routeurs) ainsi que les procédures permettant de transférer les paquets d'un sous-réseau à un autre (routage). Le protocole IPv6 est un standard défini par l'Internet Engineering Task Force (IETF) et prenant place à la couche 3 (couche réseau) du modèle OSI.

Les adresses IPv6 sont des identifiants de 128-bits dont l'architecture d'adressage ainsi que les types et le format sont définis dans le standard IETF [RFC 4291]. Le document IETF [RFC 2464] décrit la transmission des paquets IPv6 dans les réseaux Ethernet et spécifie la structure de l'adresse IPv6, en particulier la partie appelée « Interface Identifier » (IID) écrite selon le format « Extended Unique Identifier » (EUI-64). Le document IETF [RFC 4861] définit le protocole « Neighbor Discovery » pour IPv6, en particulier la spécification du « Router Advertisement » qui permet de disséminer parmi les hôtes du réseau des informations donnant la configuration de différents paramètres IPv6 du lien (préfixe, routeur par défaut, MTU (Maximum Transmission Unit) ...).

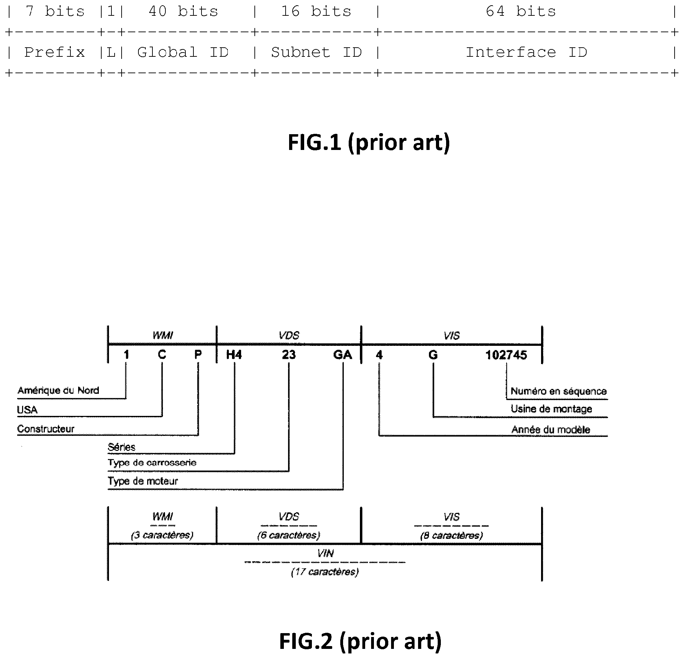

Le document IETF [RFC 4193] définit une méthode pour la création d'adresses IPv6 unicast globalement uniques et avec une portée globale mais dont l'utilisation doit être limitée à un site. Les adresses générées par cette méthode sont appelées « Unique Local IPv6 Unicast Addresses » (ULA). Les communications intersites sont possibles, à condition que le nombre de sites soit petit. Cette méthode permet de former des sites communicants et indépendants des fournisseurs d'accès Internet (FAI) pour l'allocation de leurs préfixes. Une adresse ULA est formée selon le format montré sur la figure 1, qui comprend les champs suivants:

- Prefix : fixé à « FC00 :: / 7 » pour identifier une adresse ULA.

- L : fixé à 1 si le préfixe est assigné localement.

- Global ID : Identifiant sur 40bits, utilisé pour créer des préfixes globalement uniques et généré par un algorithme pseudo aléatoire.

- Subnet ID : Identifie un sous réseau dans le site. Il est possible de créer 65,536 sous-réseaux pour un seul identifiant Global ID créé.
- Interface ID : qui sont les 64bits définis pour la création d'adresses en IPv6.

Un préfixe unique pour chaque adresse IPv6 utilisée à l'intérieur du véhicule peut être obtenu depuis un système externe, qui implique une attribution administrative suivie par des distributions automatisées. Administrativement il est possible d'attribuer des adresses IPv6 uniques par un organisme central d'attribution tel que le « IANA » (Internet Assigned Number Authority avec ces représentants en Europe Ripe, ARIN en Amérique, etc.). La distribution administrative peut ensuite être implémentée par des moyens automatisés tel que l'allocation par une station de base fixe à un véhicule particulier, en utilisant par exemple le protocole DHCPv6 [RFC3315] avec des extensions « Prefix Délégation » [RFC3633]. Les préfixes ainsi attribués administrativement au réseau fixe des stations de base, alloués ensuite dynamiquement par protocole DHCPv6 Prefix Delegation, seront finalement annoncés à l'intérieur du véhicule par des messages de type « Router Advertisement » [RFC48612]. Cependant, ces méthodes ne garantissent pas le maintient des mêmes adresses après un basculement dû à la mobilité, par exemple lors d'un changement de station de base fixe. Pour palier à ce problème, il est possible d'utiliser les protocoles de la famille Mobile IPv6 [RFC6275] avec extensions de mobilité pour la mobilité des réseaux NEMOv6 [RFC3963] afin de continuer à utiliser des adresses affectées à un véhicule par une première station de base. Toutefois, cette méthode impose l'utilisation d'une infrastructure fixe de communication avec les stations de base fixes déployées à grande échelle, et il existe aujourd'hui des zones non couvertes par de telles stations dans lesquelles il est cependant nécessaire de communiquer entre les véhicules, sans l'aide d'une station de base connectée à l'Internet.

Un autre inconvénient de cette méthode est le fait que l'unicité des adresses IPv6 est garantie seulement par l'attribution initiale administrative, par un organisme central. Pour un constructeur automobile, cette opération d'interagir avec RIPE peut prendre du temps. De plus, cette attribution serait une opération supplémentaire à l'opération d'attribution de VIN (partie WMI - world manufacturer identifier) par la SAE aux constructeurs automobile (SAE Society of Automotive Engineers).

Par ailleurs, des solutions existent pour utiliser le numéro d'identification du véhicule ou « Vehicle Identification Number » (VIN), qui est un numéro identifiant unique d'un véhicule, pour la génération d'une ou plusieurs adresses IP à l'intérieur d'un véhicule.

Le VIN étant unique, une conversion directe du VIN vers le format des adresses IP donne un identifiant IP unique. Cependant, la conversion VIN-IP pose des contraintes, en particulier pour le protocole IPv6 où les adresses sont codées sur 128 bits. En effet :

- Un VIN est représenté sur 17 caractères alphanumériques. Un caractère alphanumérique (digit) peut être représenté typiquement sur 8 bit. Une conversion directe et triviale du VIN dépasse largement les 128 bit disponibles dans une adresse IPv6.
- Une conversion triviale d'un VIN vers une seule adresse IPv6 complète (128 bit) n'est pas suffisante pour adresser de manière individuelle plusieurs équipements embarqués.
- Une conversion par « hachage » consistant à appliquer une fonction cryptographique typique permet d'obtenir des résultats uniques et de courte longueur. En revanche, les méthodes de hachage ne sont pas bijectives, et il est impossible de retrouver des parties du VIN à partir de l'adresse IPv6 correspondante. Cette approche réduit son champ d'application car elle exclue certaines applications typiques du domaine automobile, comme par exemple l'identification de certaines caractéristiques du véhicule ayant envoyé un message particulier (lieu de la construction, année de fabrication, autre) à partir de l'adresse IPv6.

Le brevet U.S. 7,917,603 de Byeong-Woo et al. propose une méthode pour créer une adresse IPv6 à partir du numéro d'identification des véhicules (VIN). Certains caractères du VIN sont extraits et convertis selon un algorithme de mapping pour créer la partie basse d'une adresse IPv6 (l'Identificateur d'Interface). Cependant, tous les caractères du VIN ne sont pas utilisés, comme par exemple le digit décrivant le site de construction « manufacture » en anglais. Deux véhicules similaires de même modèle, produits la même année dans deux manufactures différentes et ayant le même numéro de série (unique dans une même manufacture, mais pas au sein du constructeur) génèreront la même adresse IPv6, conduisant à un conflit d'adressage.

Roland Bless (Institute of Telematics Karlsruhe Institute of Technology (KIT)) dans « A Secure IPv6-based Architecture for Internal Automotive Networks » présenté au meeting IETF-83 à Paris le 26 Mars 2012, propose d'utiliser le VIN comme identifiant unique d'un véhicule dans un algorithme de génération pseudo-aléatoire de préfixes ULA. Dans cette méthode, basée sur l'algorithme décrit dans le document IETF [RFC 4193] (section 3.2.2) il existe une probabilité de collision de préfixes qui reste importante dans des contextes nécessitant la gestion d'un grand nombre de véhicules au sein d'un même constructeur. De plus, cette approche ne spécifie pas la génération d'adresses complètes de longueur 128bit. Enfin, cette méthode offre un procédé de conversion unidirectionnelle. À partir d'un VIN particulier, un préfixe ULA IPv6 est généré. La conversion inverse, depuis ce préfixe P vers le code VIN particulier est impossible.

Le document US 2012/054340 A1 **décrit** une méthode pour créer une seule adresse IPv6 pour un composant d'un véhicule à partir du VIN du véhicule.

Ainsi, aucun document dans l'état de la technique ne divulgue ni suggère la génération d'un ensemble d'adresses IPv6 uniques destinées à être utilisées dans des domaines différents, et ce à partir d'un seul VIN d'un véhicule.

Il existe alors le besoin d'une solution qui pallie les inconvénients des approches existantes. La présente invention répond à ce besoin.

**Résumé de l'invention**

Un objet de la présente invention est de fournir un procédé pour établir des adresses IPv6 uniques à partir d'un VIN.

Un autre objet de la présente invention est de générer un préfixe pour un ensemble d'adresses, valide pour les entités communicantes embarquées d'un même véhicule.

Avantageusement, le procédé de l'invention offre une garantie d'unicité d'adresses, provenant de l'utilisation d'un grand nombre de champs du VIN et de l'utilisation simultanée du préfixe et de l'identificateur d'interface.

Avantageusement, la présente invention propose un procédé de génération d'adresse IPv6 qui n'utilise pas de mécanisme de génération aléatoire et permet une meilleure garantie d'unicité d'adresses.

Avantageusement, la présente invention propose un procédé de génération d'adresse bidirectionnel qui permet de convertir un VIN vers des adresses, ainsi que la possibilité inverse, de retrouver certaines parties du VIN utilisées à la génération d'une adresse particulière.

Avantageusement, le procédé de l'invention permet la réalisation d'applications nouvelles telles que par exemple, pour un serveur dans une infrastructure fixe, recevant des paquets depuis des véhicules, peut identifier le lieu précis de la construction du véhicule, simplement en consultant l'adresse source des paquets.

Avantageusement, le procédé de la présente invention permet à chaque véhicule de générer de manière autonome un préfixe IPv6 unique. Il peut ainsi être utilisé au sein d'une flotte de véhicules comme par exemple tous les véhicules d'un même constructeur.

Dans le cadre d'une utilisation au sein d'un opérateur de flotte, le procédé de l'invention permet à chaque véhicule de la flotte de générer de manière autonome un préfixe IPv6 unique et routable dans un périmètre de routage restreint, comme le domaine réseau de l'opérateur de flotte. Avantageusement, le procédé de l'invention évite à un opérateur de flotte d'avoir à allouer explicitement un préfixe routable à l'échelle de l'Internet à chaque véhicule.

Ainsi, le procédé de l'invention offre des gains en termes de :

- ressources par des économies d'adresses routables ;
- simplicité grâce à une auto-configuration locale (non nécessitant interaction supplémentaire avec organisme central d'attribution comme RIPE) ;
- sécurité, le préfixe généré étant routable dans le domaine de l'opérateur de flotte, empêchant ainsi tout accès aux équipements IPv6 des véhicules depuis l'extérieur du domaine de l'opérateur.

Avantageusement, les préfixes générés par le procédé de l'invention peuvent être utilisés pour supporter tout type de communication entre les véhicules de la flotte d'un constructeur ou avec des serveurs de l'opérateur de flotte, que les communications soient routées via l'infrastructure de l'opérateur de flotte (Véhicule à Infrastructure ou V2I) ou routées directement entre les véhicules (Véhicule à Véhicule ou V2V) par une connectivité radio locale sans appui sur une infrastructure de communication fixe.

La présente invention trouvera avantageusement application chez les constructeurs automobiles, les opérateurs de flottes de véhicules, par exemple les agences de locations de véhicules ou encore pour toute entreprise disposant d'un parc de véhicules pour des applications de télé-diagnostique, télémaintenance ou autres.

Pour obtenir les résultats recherchés, un procédé pour générer des adresses Internet Protocol (IP) pour des entités connectées à un contrôleur de communication par un réseau interne à un véhicule, le véhicule étant associé à un numéro d'identification de véhicule (VIN) est proposé. Le procédé comprend les étapes de :

- encoder le contenu d'un ou plusieurs champs du VIN en base décimale et le contenu d'un ou plusieurs autres champs du VIN selon un algorithme non aléatoire;
- convertir en binaire le résultat des encodages;
- ordonner les bits obtenus selon une séquence prédéfinie;
- générer à partir de la séquence ordonnée un identificateur d'interface (IID) et un préfixe d'adresse IP;
- construire une adresse IP pour chaque entité, chaque adresse IP comprenant au moins ledit préfixe d'adresse IP généré à partir de la séquence ordonnée;
- construire au moins une adresse IP pour le contrôleur de communication, ladite au moins une adresse IP comprenant l'identificateur d'interface et au moins un préfixe d'adresse IP généré par un système externe au réseau de communication interne du véhicule; et
- construire au moins une adresse IP pour le contrôleur de communication, ladite au moins une adresse IP comprenant au moins ledit identificateur d'interface et ledit préfixe généré à partir de la séquence ordonnée.

Différentes variantes d'implémentations sont décrites dans les revendications dépendantes.

## Description des figures

Différents aspects et avantages de l'invention vont apparaitre en appui de la description d'un mode préféré d'implémentation de l'invention mais non limitatif, avec référence aux figures ci-dessous :

La Figure 1 montre le format d'une adresse ULA;

La Figure 2 montre un exemple de numéro d'identification de véhicule (VIN);

La Figure 3 est une vue simplifiée du procédé de conversion VIN - adresse IPv6 de l'invention;

La Figure 4 montre un environnement dans lequel implémenter la présente invention;

La Figure 5 montre les formats des objets obtenus par le procédé de l'invention.

## Description détaillée de l'invention

La figure 2 illustre un exemple de numéro d'identification de véhicule VIN, tel que référencé dans le document ISO-3779-2009. L'organisation « International Standards Organisation » (ISO) définit les standards ISO 3779 « Numéro d'identification des véhicules (VIN), contenu et structure » et ISO 3780 « Véhicules routiers - Codes d'identification mondiale des constructeurs (WMI) ». Le document ISO 3779 spécifie le contenu et la structure d'un numéro d'identification des véhicules (VIN) permettant d'assurer, à l'échelle mondiale, un système uniforme de numérotation pour l'identification des véhicules routiers. Le document ISO 3780 spécifie le contenu et la structure d'un code permettant d'assurer, à l'échelle mondiale, l'identification des constructeurs de véhicules routiers.

Le code d'identification mondiale des constructeurs « World Manufacturer Identifier » (WMI) constitue la première section du numéro d'identification des véhicules (VIN) défini dans l'ISO 3779.

Le standard décrit un encodage distinctif des différents champs du « Vehicule Identification Section » (VIS) en fonction du nombre de véhicules produits par an, le critère étant en-dessous ou au-dessus du seuil limite de 500 véhicules produits. Pour des raisons de simplification de la description et non pas de fonctionnalité, la description suivante considère un encodage pour des constructeurs produisant plus de 500 véhicules par an, comme l'exemple d'encodage VIS montré sur la figure 2.

Cependant, l'homme de l'art appréciera que le procédé décrit fonctionne aussi sur les encodages VIS de constructeurs produisant moins de 500 véhicules par an.

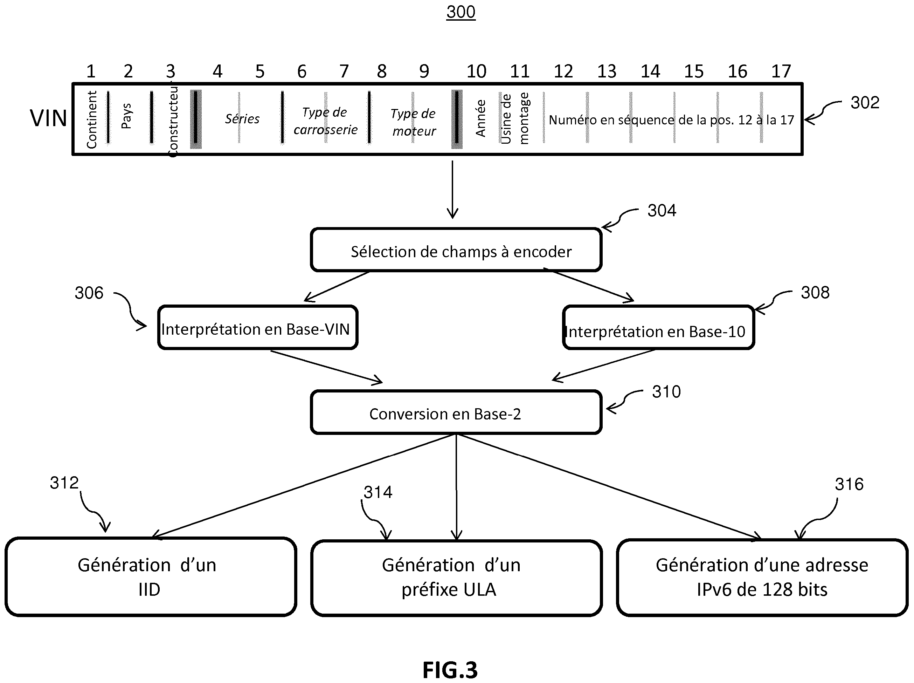

La figure 3 est une vue simplifiée du procédé (300) de conversion VIN/Adresse IPv6 de l'invention.

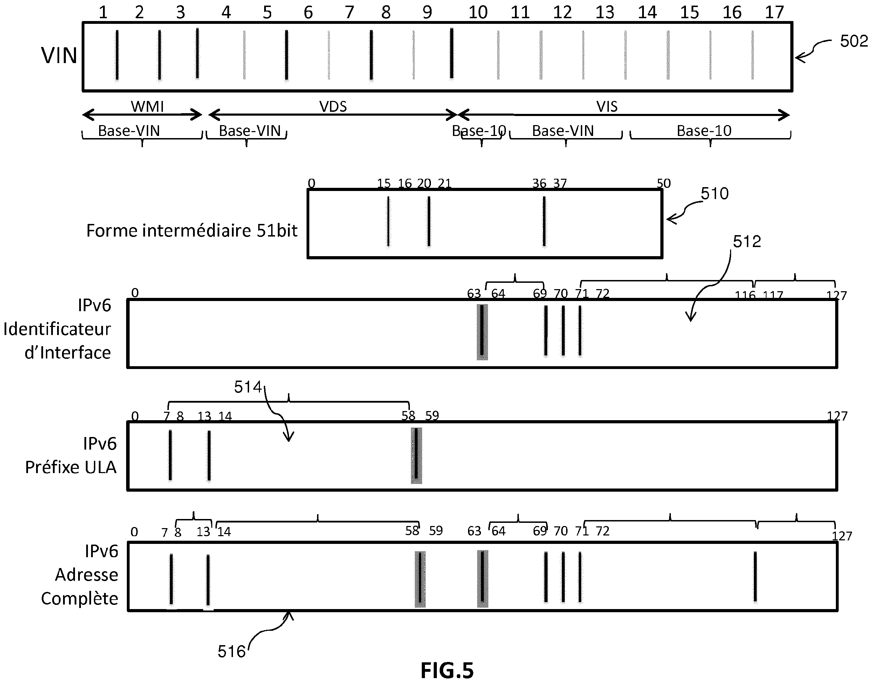

La figure 3 est décrite aussi en référence avec la figure 5 qui montre les formats des objets obtenus par le procédé de l'invention. En entrée, le procédé reçoit (302) un numéro VIN (502). A l'étape suivante (304) le procédé effectue parmi l'ensemble des champs du VIN une sélection de champs à encoder. La sélection des champs est faite de manière à garantir un maximum d'unicité.

Avantageusement, les champs sont sélectionnés parmi chacune des trois sections (WMI, VDS, VIS) du VIN, en fonction des particularités de significations de champs. La signification sémantique de chaque champ est une particularité qui le rend plus ou moins utile pour la création des identificateurs uniques. Par exemple, les champs 'Constructeur' (position 3 du WMI) ou 'Année du Modèle' ($10^e$ position du VIS) qui sont définis de la même manière pour tous les cas particuliers et ont la même signification pour les représentations distinguées par le seuil de 500 véhicules construits par an, sont des champs qui peuvent être sélectionnés comme identificateurs uniques. Cependant, l'homme du métier pourra appliquer la sélection à d'autres champs pour opérer le principe de l'invention. En revanche, des champs comme 'Type de Carrosserie' (positions 6 et 7 du VDS) n'est pas un bon candidat puisque pour un constructeur en dessous du seuil de 500 véhicules sa signification change (et devient 'Masse tout en Charge').

Dans une implémentation préférentielle, tous les champs de la section « World Manufacturer Identifier » (WMI) représentés dans le VIN sur 3 positions sont sélectionnés, tous les champs de la section « Vehicle Identification Section » (VIS) sont sélectionnés, et certains champs de la section « Vehicle Description System » (VDS) sont sélectionnés. Avantageusement, les positions 4 et 5 qui représentent le champ 'séries' sur 2 digits dans la section VIS sont sélectionnées.

Dans une étape suivante, les champs sélectionnés sont interprétés (306, 308). Parmi les champs sélectionnés, certains sont interprétés dans une nouvelle base appelée « base-VIN » (306) tandis que d'autres sont interprétés en base-10 (308). Cette interprétation différentiée permet une réduction de la taille de l'objet généré par la conversion.

La base-VIN développée pour la présente invention contient des caractères nécessaires à la création d'un VIN et adaptés à des opérations de conversion vers une base décimale et inversement.

Avantageusement, une conversion de la base décimale en base binaire ou hexadécimale est aussi possible.

Les nombres de la base-VIN peuvent s'additionner, se soustraire, se multiplier, se diviser et être convertis d'une base à une autre.

La base-VIN contient 33 caractères distincts et ordonnés. La valeur de chacun de ces caractères, représentée dans la base décimale, va de 0 à 32. Les symboles utilisés sont ceux de la description VIN du document ISO/IEC 3779 :2009, «Numéro d'identification des véhicules (VIN), Contenu et structure», Octobre 2009 et ordonnés selon la liste suivante: 0, 1, 2, 3, 4, 5, 6, 7, 8, 9, A, B, C, D, E, F, G, H, J, K, L, M, N, P, R, S, T, U, V, W, X, Y, Z.

La conversion de la base décimale en base-VIN se fait selon les étapes suivantes, où il est supposé que 'X' est un nombre décimal et 'Y' est le résultat de sa conversion en base-VIN.

1. Diviser X par 33, en entier. Tant que le quotient est supérieur à 33, continuer à diviser X par 33.
2. Noter le Reste et le convertir vers la base-VIN en suivant les règles d'équivalence.
3. Arrêter la division quand le quotient est inférieur à 33, et l'écrire en base-VIN.
4. Lire le résultat Y de la fin vers le début en prenant comme bit de poids faible le premier reste de division, après conversion en base VIN, et comme bit de poids fort le dernier quotient, après conversion en base-VIN. Le résultat Y est écrit en base-VIN.

Pour illustration, la conversion du nombre X = 1200 du décimal vers base-VIN en suivant les étapes décrites plus haut donne Y = 13C. Dans ce qui suit, La notation « a/b = c + d[b] » signifie que « c » est le quotient de la division de « a » par « b » et que « d » en est le reste.

1) 1200/23 = 36 + 12[33]. 12 est donc le premier reste. Son équivalent en base-VIN est C.
2) 36 est supérieur à 33, l'algorithme se poursuit donc.
3) 36/33 = 1 + 3[33]. 3 est le deuxième reste. Son équivalent en base-VIN est 3.
4) 1 est inférieur à 33, ce qui arrête l'exécution de notre algorithme. 1 vaut 1 en Base-VIN.
5) Le résultat final à la fin de la conversion est donc '13C'.

La conversion inverse, de la base-VIN à la base décimale s'effectue selon les étapes suivantes. L'algorithme est similaire à la conversion d'une base B (hexadécimale ou binaire, par exemple) à la base décimale, à la différence que la base vaut 33 en décimal. Dans ce qui suit, il est supposé que 'X' est un nombre en base-VIN et que 'Y' est le résultat de sa conversion en base décimale. De plus, 'n' représente le nombre de positions dans 'X', 'i' représente un compteur et 'X(i)' retourne le nombre en base-VIN à la position 'i' de 'X'.

Y = 0 ;
Pour i allant de (n-1) à 0 , calculer :

```
Y = Y + ((X(i+1))*(33^i))
```

Pour illustration, la conversion du nombre '13C' écrit en base-VIN à la base décimale donne en déroulant l'algorithme précédent donne Y = 1200 :

X = 13C, n = 3, LSB = C and MSB = 1 ; où LSB (« Least Significant Bit » en anglais) signifie le bit de poids faible, et MSB (« Most Significant Bit » en anglais) signifie le bit de poids fort.

```
Y = 1*(33^2) + 3*(33^1) + C*(33^0)
```

```
Y = 1*(1089) + 3* (33) + 12*(1)
```

```
Y = 1200
```

On retrouve donc le résultat initial de l'exemple précédent de la conversion du décimal en base-VIN.

Pour revenir à l'étape (306, 308), les champs sélectionnés du WMI, du VDS et certains champs du VIS sont interprétés en base-VIN, les autres champs sont interprétés en base-10.

L'homme de l'art appréciera que dans une variante où tous les champs sont interprétés en base-10, ou dans une variante où tous les champs sont interprétés en base-VIN, l'objet résultant est codé sur un plus grand nombre de bits que dans l'implémentation préférentielle où les champs sont interprétés de façon différenciée sur des bases mixtes. En effet, étant connu que la position 10 du VIN qui est sur 1 digit ne peut contenir que 30 valeurs distinctes, une interprétation de cette position en toute autre base que la base-VIN donnerait des résultats plus longs.

Avantageusement, la section WMI qui est sur 3 digits est interprétée en base-VIN, les positions 4 et 5 du VDS sont interprétés en base-VIN, la position 10 de la section VIS est interprétée en base-10, les positions 11, 12, 13 de la section VIS sont interprétés en base-VIN, les positions 14, 15, 16 et 17 du VIS sont interprétées en base-10.

Les champs interprétés dans les bases -VIN et -10 sont dans une étape suivante (310) convertis en binaire (base-2).

Le champ WMI est converti en binaire pour générer un objet de 16 bits. La position 10 du VIS est converti en binaire pour générer un objet de 5 bits. Les positions 11, 12, 13 du VIS sont converties en binaire pour générer un objet de 16 bits. Les positions 14, 15, 16, 17 du VIS sont converties en binaire pour générer un objet de 14 bits.

Le résultat des conversions binaires est stocké dans une forme intermédiaire représentant une séquence ordonnée de 51 bits (510). L'objet intermédiaire obtenu est unique et utilisé dans des étapes suivantes (312,314,316) pour générer trois entités :

- un identificateur d'interface (512) d'adresse IPv6 « Interface Identifier » (IID) en anglais) ;
- un préfixe ULA (514) ; et
- une adresse IPv6 (516) complète.

Avantageusement, l'IID (512) qui est généré à partir des 51 bits de la séquence ordonnée obtenue à l'étape 310, a une longueur de 64 bits. Cet identificateur est utilisé par le contrôleur de communications du véhicule pour former une adresse IPv6 complète sur son (ou ses) interfaces externes pour les communications vers l'extérieur du véhicule. Le préfixe de l'adresse externe ainsi formée peut être obtenu d'un système externe par une méthode connue d'auto-configuration ou « stateless ».

Le préfixe ULA (514) généré contient au moins les 51 bits de l'objet intermédiaire obtenu à l'étape 310. Avantageusement, l'identificateur d'interface et le préfixe ULA sont construits à partir des mêmes 51 bits de l'objet intermédiaire. Le préfixe ULA est codé sur 59 bits. Ce préfixe peut être utilisé à l'intérieur du véhicule par chacun des équipements qui sont compatibles avec le protocole TCP/IPv6 pour former des adresses IPv6 uniques pour chaque équipement. Un équipement TCP/IPv6 à l'intérieur du véhicule génère son propre identificateur d'interface en utilisant une méthode standard, comme par exemple à partir de la MAC adresse de son interface, tel que décrit par M. Crawford, «Transmission of IPv6 Packets over Ethernet Networks», IETF RFC2464, Décembre 1998.

Dans une implémentation préférentielle, le préfixe ULA est généré en concaténant des champs de:

- 7 bits dont la valeur est 1111110 ;
- 1 bit dont la valeur est 1 ;
- 51 bits dont la valeur est celle de la forme intermédiaire.

Le préfixe IPv6 ULA généré peut être annoncé par le contrôleur des communications à l'intérieur du véhicule à l'aide, par exemple, de messages « Router Advertisement ». Les équipements à l'intérieur du véhicule, en recevant ce préfixe, peuvent utiliser d'autres moyens existants pour former un Identificateur d'Interface (à partir de, par exemple, la MAC adresse) et le concaténer à ce préfixe, de manière à se former des adresses IPv6 uniques et locales, basées sur ce préfixe.

Dans une variante, une autre utilisation du préfixe ULA est possible : le contrôleur peut employer le protocole DHCPv6 pour former des adresses complètes pour les équipements à l'intérieur du véhicule, adresses basées sur ce préfixe et dont l'Identificateur d'Interface suivrait une règle arbitraire, par exemple 1, 2, 3, ...

Optionnellement, il peut être souhaitable dans certains scénarios comme par exemple pour des raisons de « privacy », de rendre non immédiatement lisibles les informations issues du VIN stockées dans les 51 bits, et les masquer, pour les retrouver ensuite dans le préfixe IPv6. Pour ce faire il est possible d'utiliser une fonction injective et difficilement inversible qui garantira que pour tout ensemble unique de 51 bits donné en entrée de cette fonction, celle-ci fournit en sortie un ensemble unique de 51 bits différent de l'entrée. Une telle fonction peut être par exemple une fonction de chiffrement asymétrique, chiffrement des 51 bits d'entrée à partir d'une clé publique, et fournissant un résultat sur 51 bits.

Le contrôleur de communication utilise aussi l'identificateur d'interface (512) et le préfixe ULA (514) générés à partir du VIN, pour former une adresse IPv6 complète (516) affectée sur son ou ses interfaces internes à l'intérieur du véhicule.

Ainsi, le procédé de l'invention permet à partir du VIN de générer pour un véhicule un ensemble d'adresses IPv6 uniques. Les adresses générées sont uniques pour tous les véhicules implémentant le procédé de l'invention.

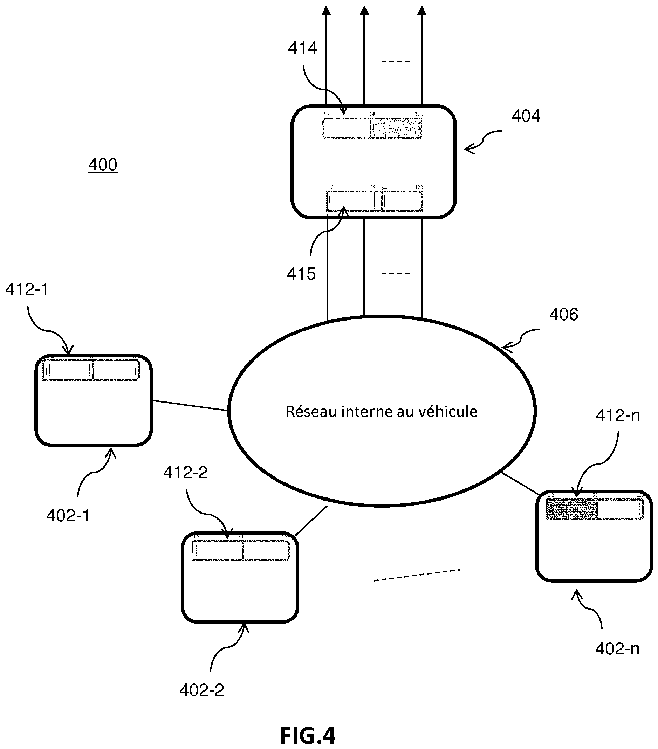

La figure 4 montre l'environnement 400 pour un véhicule dans lequel implémenter la présente invention. Un véhicule comprend une pluralité d'équipements communicants embarqués (402-1, 402-2, ... , 402-n) reliés à un routeur ou contrôleur de communication (404) par un réseau de communication (406) interne au véhicule.

Chaque équipement dispose d'une interface de communication (412-1, 412-2, 412-n) basée sur le VIN du véhicule selon le principe de la présente invention.

D'autres équipements compatibles au protocole TCP/IPv6 peuvent être embarqués et dont chaque interface de communication peut utiliser des adresses IPv6 dont le préfixe est déterminé à partir du VIN du véhicule et dont l'identificateur d'interface est déterminé par un autre système, comme par exemple, à partir de l'adresse MAC de l'interface de l'équipement.

Le contrôleur de communications (404) dispose de une ou plusieurs interfaces externes (414) pour communiquer avec l'extérieur du véhicule et de une ou plusieurs interfaces internes (415) pour communiquer avec les entités embarquées.

Sur les interfaces externes (414), des adresses IPv6 dont le préfixe est fourni par un système extérieur au véhicule tel que décrit plus haut sont utilisées. L'identifiant d'interface est déterminé à partir du VIN du véhicule selon le procédé de l'invention. Avantageusement, les positions suivantes de l'adresse externe complète du contrôleur de communication sont générées de la manière suivante :

- Les positions 0 à 63 de l'adresse IPv6 qui représentent un préfixe sont déterminées par des moyens externes comme par exemple par un message « Router Advertisement » contenant un préfixe global unique, envoyé par un système extérieur au véhicule, par une station de base fixe, ou un autre véhicule ;
- Les 6 premiers bits positionnés de 8 à 13 dans le préfixe ULA sont copiés dans les 6 premiers bits de l'Identificateur d'Interface en positions 64 à 69 ;
- Le bit 70 qui est un bit standardisé connu comme « Universal/Local » (U/L) est mis à 1 ;
- Le bit en position 71 qui est standardisé connu comme « Individual/Group » (g) est mis à 0 pour signifier qu'il s'agit d'une adresse individuelle et non pas de group ;
- Les positions 72 à 116 sont copiées des positions 14 à 58 du préfixe ULA ;
- Les positions 117 à 127 sont déterminées de la manière suivante :

    ◦ si le contrôleur de communications a une seule interface externe, alors :

        ▪ les positions 4 et 5 de la section VDS du VIN (typiquement « type de moteur ») sont interprétées en base-VIN et le résultat est converti en binaire donnant 11 bits ;

    ◦ si le contrôleur de communications a plusieurs interfaces externes, alors :

        ▪ les 11 bits les moins significatifs de l'Index d'Interface (ou « Interface Index » en anglais) sont utilisés. L'Interface Index est une valeur présente pour chaque système d'exploitation qui tourne sur des machines de type contrôleur de communication qui représente l'interface courante. Par exemple, pour un interface numéro 1, la valeur est « 1 ». L'Index d'Interface est typiquement représenté sur 16 bits.

Sur les interfaces internes (415) du contrôleur de communication, des adresses IPv6 dont le préfixe et les identificateurs d'interface sont déterminés à partir du VIN du véhicule selon le procédé de l'invention sont utilisées.

Une adresse IPv6 complète pour utilisation à l'intérieur du véhicule par le contrôleur, est construite de la manière suivante :

- les bits position 0 à 8 sont ceux d'un ULA (fc00::/7 et 8$^e$ bit L à 1) ;
- les positions 9 à 14 sont déterminées à partir des positions 64 à 69 de l'Identificateur d'Interface construit précédemment ;
- Les positions 15-59 correspondent aux positions 72-116 de l'IID ;
- Les positions 60-63 sont mises à 0.
- Les positions 64-69 de l'adresse complète correspondent aux positions 64-69 de l'Identificateur d'Interface construit précédemment ;
- La position 70 (interprété inversé signifiant « Global ») est mis à 0 ;
- La position 71 est mis à 0, pour signifier une adresse individuelle et non pas groupe ;
- Les positions 72-116 correspondent aux positions 72-116 de l'Identificateur d'Interface construit précédemment ;
- Les positions 117-127 sont déterminées de la manière suivante :

◦ si le contrôleur de communications a une seule interface interne, alors :

- les positions 4 et 5 de la section VDS du VIN (typiquement « type de moteur ») sont interprétées en base-VIN et le résultat est converti en binaire donnant 11 bits ;

◦ si le contrôleur de communications a plusieurs interfaces externes, alors :

- les 11bits les moins significatifs de l'Interface Index sont utilisés.

Ces adresses IPv6 complètes, une fois construites, sont utilisées directement sur une ou plusieurs interfaces internes du contrôleur de communications.

L'homme de l'art appréciera que des variations puissent être apportées sur le procédé tel que décrit de manière préférentielle, tout en maintenant les principes de l'invention.

La présente invention peut s'implémenter à partir d'éléments matériel et/ou logiciel. Elle peut être disponible en tant que produit programme d'ordinateur sur un support lisible par ordinateur. Le support peut être électronique, magnétique, optique, électromagnétique ou être un support de diffusion de type infrarouge. De tels supports sont par exemple, des mémoires à semi-conducteur (Random Access Memory RAM, Read-Only Memory ROM), des bandes, des disquettes ou disques magnétiques ou optiques (Compact Disk - Read Only Memory (CD-ROM), Compact Disk - Read/Write (CD-R/W) and DVD).

Ainsi la présente description illustre une implémentation préférentielle de l'invention, mais n'est pas limitative. Un exemple a été choisi pour permettre une bonne compréhension des principes de l'invention, et une application concrète, mais il n'est en rien exhaustif et doit permettre à l'homme du métier d'apporter des modifications et variantes d'implémentation en conservant les mêmes principes.

**Revendications**

**1.** Un procédé pour générer des adresses Internet Protocol, IP, pour des entités connectées à un contrôleur de communication par un réseau interne à un véhicule, le véhicule étant associé à un numéro d'identification de véhicule, VIN , le procédé comprenant les étapes de :

- encoder (306, 308) le contenu de un ou plusieurs champs du VIN en base décimale et le contenu de un ou plusieurs autres champs du VIN selon un algorithme non aléatoire;
- convertir (310) en binaire le résultat des encodages;
- ordonner les bits obtenus selon une séquence prédéfinie;
- générer (312, 314) à partir de la séquence ordonnée un identificateur d'interface, IID, et un préfixe d'adresse IP;
- construire une adresse IP pour chaque entité, chaque adresse IP comprenant au moins ledit préfixe d'adresse IP généré à partir de la séquence ordonnée, ledit procédé étant **caractérisé en ce qu'**il comprend en outre les étapes de:

- construire au moins une adresse IP pour le contrôleur de communication, ladite au moins une adresse IP comprenant l'identificateur d'interface et au moins un préfixe d'adresse IP généré par un système externe au réseau de communication interne du véhicule; et
- construire (316) au moins une adresse IP pour le contrôleur de communication, ladite au moins une adresse IP comprenant au moins ledit identificateur d'interface et ledit préfixe généré à partir de la séquence ordonnée.

**2.** Le procédé selon la revendication 1 comprenant de plus une étape d'envoyer un message aux entités du véhicule pour annoncer ledit préfixe d'adresse IP généré.

**3.** Le procédé selon la revendication 1 ou 2 dans lequel l'adresse IP construite pour chaque entité comprend de plus un identificateur d'interface basé sur la MAC adresse de chaque entité.

**4.** Le procédé selon l'une quelconque des revendications 1 à 3 comprenant avant l'étape d'encodage, une étape de sélection (304) des champs du VIN à encoder.

**5.** Le procédé selon la revendication 4 dans lequel l'étape de sélection consiste à sélectionner tous les champs de la section « World Manufacturer Identifier » (WMI), tous les champs de la section « Vehicle Identification Section » , VIS, et un ou plusieurs champs de la section « Vehicle Description System » , VDS.

**6.** Le procédé selon la revendication 5 dans lequel les positions 4 et 5 de la section VDS sont sélectionnées.

**7.** Le procédé selon la revendication 5 ou 6 dans lequel l'étape d'encodage consiste à encoder en base décimale les positions 10, 14, 15, 16 et 17 de la section VIS.

**8.** Le procédé selon l'une quelconque des revendications 1 à 7 dans lequel la séquence ordonnée contient 51 bits.

**9.** Le procédé selon l'une quelconque des revendications 1 à 8 dans lequel les adresses IP sont des adresses IPv6, et ledit préfixe d'adresse IP généré est un préfixe ULA.

**10.** Un système pour générer des adresses Internet Protocol, IP, pour des entités (402-1, 402-2, 402-3) connectées à un contrôleur de communication (404) par un réseau interne (406) à un véhicule, le véhicule étant associé à un numéro d'identification de véhicule, VIN, le système comprenant des moyens pour mettre en oeuvre les étapes du procédé selon l'une quelconque des revendications 1 à 9.

**11.** Le système de la revendication 9 dans lequel les entités sont aptes à communiquer selon le protocole TCP/IPv6 et les adresses générées sont des adresses IPv6.

**12.** Le système selon la revendication 10 ou 11 dans lequel le contrôleur de communication comprend des interfaces internes (415) et des interfaces externes (414) pour communiquer sur les adresses IP générées selon l'une quelconque des revendications 1 à 9.

**13.** Un produit programme d'ordinateur, ledit programme d'ordinateur comprenant des instructions de code permettant d'effectuer les étapes du procédé selon l'une quelconque des revendications 1 à 9, lorsque ledit programme est exécuté sur un ordinateur.

**Patentansprüche**

**1.** Verfahren zum Erzeugen von Internet-Protocol-(IP)-Adressen für Entitäten, die durch ein internes Netzwerk eines Fahrzeugs mit einer Kommunikationssteuerung verbunden sind, wobei das Fahrzeug mit einer Fahrzeugidentifikationsnummer (VIN) assoziiert ist, wobei das Verfahren die folgenden Schritte beinhaltet:

- Codieren (306, 308) des Inhalts von einem oder mehreren Feldern der VIN auf dezimaler Basis und des Inhalts von einem oder mehreren anderen Feldern der VIN gemäß einem nicht zufälligen Algorithmus;
- Umwandeln (310) des Ergebnisses der Codierung in die binäre Form;
- Ordnen der erhaltenen Bits zu einer vordefinierten Sequenz;
- Erzeugen (312, 314), auf der Basis der geordneten Sequenz, einer Schnittstellenidentifikation (IID) und eines IP-Adresspräfix;
- Konstruieren einer IP-Adresse für jede Entität, wobei jede IP-Adresse wenigstens den IP-Adresspräfix aufweist, der auf der Basis der geordneten Sequenz erzeugt wurde, wobei das Verfahren **dadurch gekennzeichnet ist, dass** es die folgenden Schritte beinhaltet:
- Konstruieren wenigstens einer IP-Adresse für die Kommunikationssteuerung, wobei die wenigstens eine IP-Adresse die Schnittstellenidentifikation und wenigstens einen IP-Adresspräfix umfasst, der von einem System außerhalb des internen Kommunikationsnetzes des Fahrzeugs erzeugt wurde; und
- Konstruieren (316) wenigstens einer IP-Adresse für die Kommunikationssteuerung, wobei die wenigstens eine IP-Adresse wenigstens eine Schnittstellenidentifikation und den auf der Basis der geordneten Sequenz erzeugten Präfix umfasst.

**2.** Verfahren nach Anspruch 1, das ferner einen Schritt des Sendens einer Nachricht zu den Entitäten des Fahrzeugs beinhaltet, um den erzeugten IP-Adresspräfix mitzuteilen.

**3.** Verfahren nach Anspruch 1 oder 2, wobei die für jede Entität konstruierte IP-Adresse ferner einen Schnittstellenidentifikator auf der Basis der MAC-Adresse jeder Entität umfasst.

**4.** Verfahren nach einem der Ansprüche 1 bis 3, das vor dem Codierschritt einen Schritt (304) des Auswählens der Felder der zu codierenden VIN beinhaltet.

5. Verfahren nach Anspruch 4, wobei der Auswahlschritt das Auswählen aller Felder des "World Manufacturer Identifier" (WMI) Abschnitts, aller Felder des "Vehicle Identification Section" (VIS) Abschnitts und eines oder mehrerer Felder des "Vehicle Description System" (VDS) Abschnitts beinhaltet.

6. Verfahren nach Anspruch 5, wobei die Positionen 4 und 5 des VDS-Abschnitts ausgewählt werden.

7. Verfahren nach Anspruch 5 oder 6, wobei der Codierschritt das Codieren der Positionen 10, 14, 15, 16 und 17 des VIS-Abschnitts auf dezimaler Basis beinhaltet.

8. Verfahren nach einem der Ansprüche 1 bis 7, wobei die geordnete Sequenz 51 Bits enthält.

9. Verfahren nach einem der Ansprüche 1 bis 8, wobei die IP-Adressen IPv6-Adressen sind und der erzeugte IP-Adresspräfix ein ULA-Präfix ist.

10. System zum Erzeugen von Internet-Protocol-(IP)-Adressen für Entitäten (402-1, 402-2, 402-3), die durch ein internes Netzwerk (406) eines Fahrzeugs mit einer Kommunikationssteuerung (404) verbunden sind, wobei das Fahrzeug mit einer Fahrzeugidentifikationsnummer (VIN) assoziiert ist, wobei das System Mittel zum Implementieren der Schritte des Verfahrens nach einem der Ansprüche 1 bis 9 umfasst.

11. System nach Anspruch 9, wobei die Entitäten zum Kommunizieren gemäß dem TCP/IPv6-Protokoll ausgelegt sind und die erzeugten Adressen IPv6-Adressen sind.

12. System nach Anspruch 10 oder 11, wobei die Kommunikationssteuerung interne Schnittstellen (415) und externe Schnittstellen (414) zum Kommunizieren auf den gemäß einem der Ansprüche 1 bis 9 erzeugten IP-Adressen umfasst.

13. Computerprogrammprodukt, wobei das Computerprogramm Code-Anweisungen umfasst, die die Durchführung der Schritte des Verfahrens nach einem der Ansprüche 1 bis 9 zulassen, wenn das Programm auf einem Computer abgearbeitet wird.

**Claims**

1. A method for generating Internet Protocol (IP) addresses for entities connected to a communication controller by an internal network of a vehicle, said vehicle being associated with a vehicle identification number (VIN), said method comprising the following steps:

   - encoding (306, 308) the content of one or more fields of the VIN on a decimal basis and the content of one or more other fields of the VIN according to a non-random algorithm;
   - converting (310) the result of the encoding into binary;
   - ordering the bits obtained into a predefined sequence;
   - generating (312, 314), on the basis of said ordered sequence, an interface identifier (IID) and an IP address prefix;
   - constructing an IP address for each entity, each IP address comprising at least said IP address prefix generated on the basis of said ordered sequence, said method being **characterised in that** it further comprises the following steps:
   - constructing at least one IP address for said communication controller, said at least one IP address comprising said interface identifier and at least one IP address prefix generated by a system outside of the internal communication network of said vehicle; and
   - constructing (316) at least one IP address for said communication controller, said at least one IP address comprising at least said interface identifier and said prefix generated on the basis of said ordered sequence.

2. The method according to claim 1, further comprising a step of sending a message to the entities of said vehicle to declare said generated IP address.

3. The method according to claim 1 or 2, wherein the IP address constructed for each entity further comprises an interface identifier based on the MAC address of each entity.

4. The method according to any one of claims 1 to 3, comprising, prior to said encoding step, a step (304) of selecting the fields of the VIN to be encoded.

5. The method according to claim 4, wherein said selection step comprises selecting all of the fields of the "World Manufacturer Identifier" (WMI) section, all of the fields of the "Vehicle Identification Section" (VIS) section and one or more fields of the "Vehicle Description System" (VDS) section.

6. The method according to claim 5, wherein positions 4 and 5 of the VDS section are selected.

7. The method according to claim 5 or 6, wherein said encoding step comprises encoding positions 10, 14, 15, 16 and 17 of the VIS section on a decimal basis.

8. The method according to any one of claims 1 to 7, wherein said ordered sequence contains 51 bits.

9. The method according to any one of claims 1 to 8, wherein the IP addresses are IPv6 addresses and said generated IP address prefix is a ULA prefix.

10. A system for generating Internet Protocol (IP) addresses for entities (402-1, 402-2, 402-3) connected to a communication controller (404) by an internal network (406) of a vehicle, said vehicle being associated with a vehicle identification number (VIN), said system comprising means for implementing the steps of the method according to any one of claims 1 to 9.

11. The system according to claim 9, wherein said entities are designed to communicate according to the TCP/IPv6 protocol and the generated addresses are IPv6 addresses.

12. The system according to claim 10 or 11, wherein said communication controller comprises internal interfaces (415) and external interfaces (414) for communicating on the IP addresses generated according to any one of claims 1 to 9.

13. A computer program product, said computer program comprising code instructions allowing the steps of the method according to any one of claims 1 to 9 to be carried out when said program is executed on a computer.

```
| 7 bits |1|  40 bits  |  16 bits  |         64 bits              |
+--------+-+-----------+-----------+------------------------------+
| Prefix |L| Global ID | Subnet ID |         Interface ID         |
+--------+-+-----------+-----------+------------------------------+
```

## FIG.1 (prior art)

## FIG.2 (prior art)

300

| 1 | 2 | 3 | 4 | 5 | 6 | 7 | 8 | 9 | 10 | 11 | 12 | 13 | 14 | 15 | 16 | 17 |
|---|---|---|---|---|---|---|---|---|---|---|---|---|---|---|---|---|

VIN | Continent | Pays | Constructeur | | Séries | | Type de carrosserie | | Type de moteur | | Année | Usine de montage | Numéro en séquence de la pos. 12 à la 17 |

302

Sélection de champs à encoder — 304

306 — Interprétation en Base-VIN

Interprétation en Base-10 — 308

Conversion en Base-2 — 310

312 — Génération d'un IID

314 — Génération d'un préfixe ULA

316 — Génération d'une adresse IPv6 de 128 bits

**FIG.3**

400

414

404

415

406

412-1

402-1

412-2

402-2

412-n

402-n

Réseau interne au véhicule

**FIG.4**

FIG.5

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 7917603 B, Byeong-Woo
- US 2012054340 A1